# EUROPÄISCHE PATENTSCHRIFT

(11) **EP 4 415 957 B1**
(45) Veröffentlichungstag und Bekanntmachung des Hinweises auf die Patenterteilung: **14.01.2026**
(21) Anmeldenummer: 22793105.2
(22) Anmeldetag: 07.10.2022
(51) Int. Cl.: B29D 30/06

(54) **VORRICHTUNG ZUM VULKANISIEREN EINES REIFENS UND VERFAHREN ZUM BETREIBEN EINER VORRICHTUNG ZUM VULKANISIEREN VON REIFEN**
APPARATUS FOR VULCANISING A TYRE, AND METHOD FOR OPERATING AN APPARATUS FOR VULCANISING TYRES
APPAREIL DE VULCANISATION D'UN PNEUMATIQUE ET PROCÉDÉ DE FONCTIONNEMENT D'UN APPAREIL DE VULCANISATION DE PNEUMATIQUES

(30) Priorität: 11.10.2021 DE 102021211452
(43) Veröffentlichungstag der Anmeldung: 21.08.2024
(73) Patentinhaber: Continental Reifen Deutschland GmbH, 30175 Hannover (DE)
(72) Erfinder: WENZEL, Karsten, 30175 Hannover (DE); WEDEKIND, Horst, 30175 Hannover (DE); RAMM, Michael, 30175 Hannover (DE); HARISCH, Ralph, 30175 Hannover (DE)
(74) Vertreter: Continental Corporation
(86) Internationale Anmeldenummer: PCT/DE2022/200232
(87) Internationale Veröffentlichungsnummer: WO 2023/061539

(56) Entgegenhaltungen:
- EP-A1- 0 123 733
- EP-A1- 2 065 151
- EP-A2- 0 372 920
- CN-A- 114 603 894
- DE-A1- 102018 216 754
- FR-A1- 2 613 979
- JP-A- S5 970 535

## Beschreibung

Die Erfindung betrifft eine Vorrichtung zum Vulkanisieren eines Reifens, mit einer Reifenaufnahmeeinheit, welche eine Vulkanisierform aufweist, wobei die Vulkanisierform einen Ausform- und Vulkanisierraum für die Aufnahme eines zu vulkanisierenden Reifenrohlings bereitstellt, wobei sich ein Fluidpfad für ein Temperiermedium durch einen ringförmigen Heizkörper der Reifenaufnahmeeinheit erstreckt. Die Vorrichtung umfasst ferner einen um die Reifenaufnahmeeinheit umlaufenden Isolationskörper, welcher dazu eingerichtet ist, einen Wärmeaustausch zwischen der Reifenaufnahmeeinheit und der Umgebung der Vorrichtung zu verringern. Darüber hinaus umfasst die Vorrichtung zumindest einen in vertikaler Richtung verfahrbaren Druckkörper, welcher auf einer Stirnseite der Reifenaufnahmeeinheit angeordnet ist, wobei mittels einer Vertikalbewegung des Druckkörpers ein horizontales Heranfahren von Formsegmenten der Vulkanisierform an einen sich in dem Vulkanisierraum befindenden Reifenrohling veranlassbar ist, wobei der sich durch den ringförmigen Heizkörper der Reifenaufnahmeeinheit erstreckende Fluidpfad außerhalb des ringförmigen Heizkörpers durch den in vertikaler Richtung verfahrbaren Druckkörper verläuft.

Darüber hinaus betrifft die Erfindung ein System zum Vulkanisieren von Reifen unterschiedlicher Form und/oder Größe.

Ferner betrifft die Erfindung ein Verfahren zum Betreiben einer Vorrichtung zum Vulkanisieren von Reifen, mit den Schritten: Vulkanisieren eines ersten Reifens unter Verwendung einer ersten Reifenaufnahmeeinheit der Vorrichtung, wobei die erste Reifenaufnahmeeinheit eine erste Vulkanisierform aufweist und die erste Vulkanisierform einen Ausform- und Vulkanisierraum für die Aufnahme eines ersten zu vulkanisierenden Reifenrohlings bereitstellt, und Trennen von einem oder mehreren Koppelanschlüssen der ersten Reifenaufnahmeeinheit, welche mit einem sich durch einen ringförmigen Heizkörper der ersten Reifenaufnahmeeinheit erstreckenden Fluidpfad verbunden sind, von einem oder mehreren in einer Anschlusszone eines in vertikaler Richtung verfahrbaren Druckkörpers positionierten Koppelanschlüssen des in vertikaler Richtung verfahrbaren Druckkörpers.

Eine Vorrichtung der eingangs genannten Art ist beispielsweise aus der EP 0 372 920 A2 bekannt. Offenbart ist eine Vorrichtung zum Vulkanisieren eines Reifens mit einer Reifenaufnahmeeinheit, welche eine Vulkanisierform aufweist, wobei sich ein Fluidpfad für ein Temperiermedium durch einen ringförmigen Heizkörper der Reifenaufnahmeeinheit erstreckt. Ferner sind ein umlaufender Isolationskörper und ein in vertikaler Richtung verfahrbarer Druckkörper zum horizontalen Heranfahren der Formsegmente vorhanden. Der sich durch den ringförmigen Heizkörper erstreckende Fluidpfad verläuft außerhalb des ringförmigen Heizkörpers durch den in vertikaler Richtung verfahrbaren Druckkörper. Die Vorrichtung soll einen einfachen Wechsel der Vulkanisationsform ermöglichen.

Aus der JP S59 70535 A ist eine weitere Vorrichtung zum Vulkanisieren eines Reifens bekannt. Die Vorrichtung weist einen oberen Heizkörper auf, welcher durch einen in vertikaler Richtung durch einen Druckkörper hindurchgeführten Fluidpfad für ein Temperaturmedium beheizbar ist.

Vorrichtungen zum Vulkanisieren von Reifen, sogenannte Reifenheizpressen oder Reifenvulkanisiermaschinen, sollen idealerweise zum Vulkanisieren von Reifen unterschiedlicher Form und/oder Größe eingesetzt werden können. Hierzu können die Vorrichtungen üblicherweise mit unterschiedlichen Reifenaufnahmeeinheiten, sogenannten Containern, ausgestattet werden.

Die Reifenaufnahmeeinheiten weisen regelmäßig ein oder mehrere Heizkörper auf, welche mit Fluidpfaden ausgestattet sind, wobei ein Temperiermedium, beispielsweise heißer Dampf, in den jeweiligen Fluidpfad zum Aufheizen des Heizkörpers einleitbar ist. Die Anschlüsse zum Einleiten und Ausleiten des Temperiermediums von Reifenaufnahmeeinheiten, welche zum Vulkanisieren von Reifen unterschiedlicher Form und/oder Größe eingesetzt werden, sind abhängig von der Größe der Reifenaufnahmeeinheit an unterschiedlichen Positionen angeordnet und/oder weisen unterschiedliche Abstände zueinander auf. Ein um die Reifenaufnahmeeinheit umlaufender Isolationskörper der Vorrichtung hat daher notwendigerweise eine oder mehrere vergleichsweise große Ausnehmungen und/oder Öffnungen, damit die Anschlüsse der unterschiedlichen Reifenaufnahmeeinheiten aufgenommen werden können und zugänglich sind. Durch die Ausnehmungen und Öffnungen des um die Reifenaufnahmeeinheit umlaufenden Isolationskörpers wird während des Betriebs der Vorrichtung aufgrund eines konvektiven Wärmetransports eine erhebliche Menge an Energie an die Umgebung abgegeben. Die Vorrichtungen sind außerdem häufig so konzipiert, dass der Wärmeverlust zusätzlich durch einen Schornsteineffekt erhöht wird.

Die der Erfindung zugrundeliegende Aufgabe besteht also darin, den Wärmeverlust beim Vulkanisieren eines Reifens zu reduzieren, wobei die eingesetzte Vorrichtung vorzugsweise das Vulkanisieren von Reifen unterschiedlicher Form und/oder Größe erlauben soll.

Die Aufgabe wird gelöst durch eine Vorrichtung der eingangs genannten Art, wobei der sich durch den ringförmigen Heizkörper der Reifenaufnahmeeinheit erstreckende Fluidpfad mit einem Koppelanschluss oder mehreren Koppelanschlüssen der Reifenaufnahmeeinheit verbunden ist, wobei der eine Koppelanschluss oder die mehreren Koppelanschlüsse der Reifenaufnahmeeinheit in einer Anschlusszone des in vertikaler Richtung verfahrbaren Druckkörpers, insbesondere zerstörungsfrei lösbar, mit einem Koppelanschluss bzw. mehreren Koppelanschlüssen des in vertikaler Richtung verfahrbaren Druckkörpers verbunden ist bzw. sind, wobei die Anschlusszone als Universalschnittstelle zum Anschließen von Koppelanschlüssen unterschiedlicher Reifenaufnahmeeinheiten ausgebildet ist.

Dadurch, dass der sich durch den ringförmigen Heizkörper der Reifenaufnahmeeinheit erstreckende Fluidpfad durch den stirnseitig angeordneten verfahrbaren Druckkörper verläuft, wird der Fluidpfad stirnseitig, also an der Oberseite oder an der Unterseite, aus der Vorrichtung herausgeführt. Es kann auf Ausnehmungen und Öffnungen in dem umlaufenden Isolationskörper verzichtet werden, sodass ein konvektiver Wärmeverlust durch einen Wärmeaustausch mit der Umgebung verhindert oder zumindest erheblich verringert wird.

Das eingesetzte Temperiermedium kann beispielsweise Dampf sein. Innerhalb des Fluidpfads kondensiert der Dampf. Der eingeleitete Dampf wird als Kondensat aus der Vorrichtung ausgeleitet. Wenn als Temperiermedium Dampf eingesetzt wird, werden erhebliche Energieeinsparungen gegenüber einer Vorrichtung mit einem Ausnehmungen und/oder Öffnungen aufweisenden umlaufenden Isolationskörper erzielt, wobei diese Energieeinsparungen auf die Unterbindung des konvektiven Wärmeverlusts an die Umgebung zurückzuführen sind.

Die Formsegmente der Vulkanisierform werden zum Vulkanisieren eines sich in dem Vulkanisierraum befindenden Reifenrohlings horizontal an den Reifenrohling herangefahren. Der in vertikaler Richtung verfahrbare Druckkörper der Vorrichtung kann beispielsweise eine Druckplatte sein.

Die Reifenaufnahmeeinheit kann den sogenannten Container der Vorrichtung bilden. Die Vorrichtung kann eine Reifenheizpresse oder eine Reifenvulkanisiermaschine sein.

Die unterschiedlichen Reifenaufnahmeeinheiten, welche in die Vorrichtung eingesetzt werden können, weisen also Koppelanschlüsse auf, welche mit der Anschlusszone des in vertikaler Richtung verfahrbaren Druckkörpers kompatibel sind, sodass sich eine Universalschnittstelle zum Anschließen von Koppelanschlüssen unterschiedlicher Reifenaufnahmeeinheiten ergibt.

**In** einer besonders bevorzugten Ausführungsform der erfindungsgemäßen Vorrichtung ist der umlaufende Isolationskörper ausklinkungsfrei ausgebildet. Vorzugsweise ist der umlaufende Isolationskörper ein Isolationszylinder ohne Materialaussparungen zum Durchführen von Fluidleitungen bzw. Fluidpfaden. Vorzugsweise ist der umlaufende Isolationskörper ausnehmungsfrei und/oder frei von Öffnungen in der umlaufenden Mantelfläche ausgebildet.

Es ist ferner eine erfindungsgemäße Vorrichtung bevorzugt, bei welchem der sich durch den ringförmigen Heizkörper der Reifenaufnahmeeinheit erstreckende Fluidpfad mit einem Mediumanschluss oder mehreren Medienanschlüssen verbunden ist, wobei der eine Mediumanschluss oder die mehreren Medienanschlüsse auf der der Reifenaufnahmeeinheit abgewandten Seite des in vertikaler Richtung verfahrbaren Druckkörpers angeordnet ist bzw. sind. Mittels der Medienanschlüsse ist der Fluidpfad an eine Medienversorgungsleitung und/oder eine Medienabführleitung anschließbar. Über die Medienversorgungsleitung kann dem Fluidpfad heißer Dampf zur Verfügung gestellt werden. Über die Medienabführleitung kann Kondensat aus dem Fluidpfad abgeführt werden. Die Medienanschlüsse können einen Medienzuflussanschluss und/oder einen Medienabflussanschluss umfassen. Der eine oder die mehreren Medienanschlüsse für den sich durch den ringförmigen Heizkörper erstreckenden Fluidpfad befinden sich vorzugsweise an der stirnseitigen Oberseite der Vorrichtung.

In einer Weiterbildung weist die erfindungsgemäße Vorrichtung einen oberen flachen Heizkörper auf, welcher oberhalb des Ausform- und Vulkanisierraums der Reifenaufnahmeeinheit angeordnet ist, und durch welchen sich ein Fluidpfad für ein Temperiermedium erstreckt, wobei der sich durch den oberen flachen Heizkörper erstreckende Fluidpfad außerhalb des oberen flachen Heizkörpers durch den in vertikaler Richtung verfahrbaren Druckkörper verläuft. Der sich durch den flachen oberen Heizkörper erstreckende Fluidpfad ist vorzugsweise mit einem oder mehreren Medienanschlüssen verbunden, wobei der eine oder die mehreren Medienanschlüsse auf der der Reifenaufnahmeeinheit abgewandten Seite des in vertikaler Richtung verfahrbaren Druckkörpers angeordnet sind. Der obere flache Heizkörper ist vorzugsweise als Heizplatte ausgebildet, in welche das Temperiermedium einleitbar ist. Durch den in vertikaler Richtung verfahrbaren Druckkörper der Vorrichtung verläuft vorzugsweise der sich durch den oberen flachen Heizkörper erstreckende Fluidpfad und der sich durch den ringförmigen Heizkörper erstreckende Fluidpfad der Reifenaufnahmeeinheit.

In einer Weiterbildung der erfindungsgemäßen Vorrichtung verläuft der sich durch den ringförmigen Heizkörper der Reifenaufnahmeeinheit erstreckende Fluidpfad außerhalb des ringförmigen Heizkörpers durch den oberen flachen Heizkörper. Die Durchtrittsstelle, an welcher der sich durch den ringförmigen Heizkörper erstreckende Fluidpfad durch den oberen flachen Heizkörper verläuft, ist vorzugsweise beabstandet von dem Fluidpfad des oberen flachen Heizkörpers angeordnet.

In einer weiteren bevorzugten Ausführungsform weist die erfindungsgemäße Vorrichtung einen unteren flachen Heizkörper auf, welcher unterhalb des Ausform- und Vulkanisierraums der Reifenaufnahmeeinheit angeordnet ist und durch welchen sich ein Fluidpfad für ein Temperiermedium erstreckt, wobei der sich durch den unteren flachen Heizkörper erstreckende Fluidpfad außerhalb des unteren flachen Heizkörpers durch einen feststehenden Druckkörper unterhalb der Reifenaufnahmeeinheit verläuft. Der sich durch den flachen unteren Heizkörper erstreckende Fluidpfad ist vorzugsweise mit einem oder mehreren Medienanschlüssen verbunden, wobei der eine oder die mehreren Medienanschlüsse auf der der Reifenaufnahmeeinheit abgewandten Seite des feststehenden Druckkörpers angeordnet sind. Der untere flache Heizkörper ist vorzugsweise eine Heizplatte.

Es ist darüber hinaus eine erfindungsgemäße Vorrichtung bevorzugt, bei welcher der ringförmige Heizkörper als ein abschnittsweise konischer Schließring ausgebildet ist, welcher dazu eingerichtet ist, über eine Vertikalbewegung ein oder mehrere die Vulkanisierform tragende Formträgerteile horizontal zu verfahren. Der Schließring und die Formträgerteile können aus Stahl ausgebildet sein. Die Vulkanisierform bzw. die Formsegmente der Vulkanisierform können aus Aluminium ausgebildet sein. Der Schließring kann einen Konus aufweisen. Das eine oder die mehreren Formträgerteile können einen Gegenkonus aufweisen, welcher bei einer Vertikalbewegung des als Schließring ausgebildeten ringförmigen Heizkörpers mit dem Konus des ringförmigen Heizkörpers in Kontakt steht.

Es ist ferner eine erfindungsgemäße Vorrichtung vorteilhaft, bei welcher der sich durch den ringförmigen Heizkörper der Reifenaufnahmeeinheit erstreckende Fluidpfad mit einem oder mehreren Koppelanschlüssen der Reifenaufnahmeeinheit verbunden ist, wobei der eine oder die mehreren Koppelanschlüsse der Reifenaufnahmeeinheit in einer Anschlusszone des in vertikaler Richtung verfahrbaren Druckkörpers, insbesondere zerstörungsfrei lösbar, mit Koppelanschlüssen des in vertikaler Richtung verfahrbaren Druckkörpers verbunden sind. Die Reifenaufnahmeeinheit kann vorzugsweise aus der Vorrichtung entnommen werden. Die Vorrichtung kann mit unterschiedlichen Reifenaufnahmeeinheiten ausgestattet werden, sodass mittels der Vorrichtung Reifen unterschiedlicher Form und/oder Größe unter Verwendung von unterschiedlichen Reifenaufnahmeeinheiten vulkanisiert werden können. Der eine oder die mehreren Koppelanschlüsse der Reifenaufnahmeeinheit sind nach dem Einsetzen der Reifenaufnahmeeinheit in die Vorrichtung also bereits so positioniert, dass diese durch eine Vertikalbewegung des Druckkörpers in die Anschlusszone des Druckkörpers verbringbar sind. Das Verbinden der Koppelanschlüsse von Reifenaufnahmeeinheit und Druckkörper lässt sich somit mit vergleichsweise geringem Aufwand realisieren.

Die der Erfindung zugrundeliegende Aufgabe wird ferner durch ein System der eingangs genannten Art gelöst, wobei das erfindungsgemäße System eine Vorrichtung nach einer der vorstehend beschriebenen Ausführungsformen aufweist. Das System umfasst ferner eine alternative Reifenaufnahmeeinheit, welche eine Vulkanisierform aufweist, wobei die Vulkanisierform einen Ausform- und Vulkanisierraum für die Aufnahme eines zu vulkanisierenden Reifenrohlings bereitstellt, wobei sich durch einen ringförmigen Heizkörper der Reifenaufnahmeeinheit ein Fluidpfad für ein Temperiermedium erstreckt und der sich durch den ringförmigen Heizkörper der alternativen Reifenaufnahmeeinheit erstreckende Fluidpfad außerhalb des ringförmigen Heizkörpers mit einem oder mehreren Koppelanschlüssen der alternativen Reifenaufnahmeeinheit verbunden ist. Die Reifenaufnahmeeinheit der Vorrichtung ist durch die alternative Reifenaufnahmeeinheit zum Betreiben der Vorrichtung mit der alternativen Reifenaufnahmeeinheit ersetzbar. Der eine oder die mehreren Koppelanschlüsse der alternativen Reifenaufnahmeeinheit sind nach einem Ausbau der Reifenaufnahmeeinheit in einer Anschlusszone des in vertikaler Richtung verfahrbaren Druckkörpers, insbesondere zerstörungsfrei lösbar, mit Koppelanschlüssen des in vertikaler Richtung verfahrbaren Druckkörpers verbindbar.

Die der Erfindung zugrundeliegende Aufgabe wird ferner durch ein Verfahren der eingangs genannten Art gelöst, wobei im Rahmen des erfindungsgemäßen Verfahrens die erste Reifenaufnahmeeinheit durch eine zweite Reifenaufnahmeeinheit ersetzt wird, wobei die zweite Reifenaufnahmeeinheit eine zweite Vulkanisierform aufweist und die zweite Vulkanisierform einen Ausform- und Vulkanisierraum für die Aufnahme eines zweiten zu vulkanisierenden Reifenrohlings bereitstellt. Nach dem Ersetzen der ersten Reifenaufnahmeeinheit durch die zweite Reifenaufnahmeeinheit werden ein oder mehrere Koppelanschlüsse der zweiten Reifenaufnahmeeinheit, welche mit einem sich durch einen ringförmigen Heizkörper der zweiten Reifenaufnahmeeinheit erstreckenden Fluidpfad verbunden sind, mit dem einen oder den mehreren in der Anschlusszone des in vertikaler Richtung verfahrbaren Druckkörpers positionierten Koppelanschlüssen des in vertikaler Richtung verfahrbaren Druckkörpers verbunden. Anschließend erfolgt ein Vulkanisieren eines zweiten Reifens unter Verwendung der zweiten Reifenaufnahmeeinheit.

Im Rahmen des erfindungsgemäßen Verfahrens werden also zwei unterschiedliche Reifenaufnahmeeinheiten zum Vulkanisieren von Reifen, welche sich in ihrer Form und/oder Größe voneinander unterscheiden, verwendet. Der eine oder die mehreren Koppelanschlüsse der ersten und der zweiten Reifenaufnahmeeinheit sind jedoch an der gleichen Position angeordnet und/oder weisen die gleiche Geometrie auf, sodass die Anschlusszone als Universalschnittstelle zum Anschließen der Koppelanschlüsse der ersten und der zweiten Reifenaufnahmeeinheit genutzt werden kann.

Nachfolgend werden bevorzugte Ausführungsformen der Erfindung unter Bezugnahme auf die beiliegenden Zeichnungen näher erläutert und beschrieben. Dabei zeigen:
- Fig. 1: eine erfindungsgemäße Vorrichtung zum Vulkanisieren eines Reifens mit einer geöffneten ersten Reifenaufnahmeeinheit in einer schematischen Schnittdarstellung;
- Fig. 2: die in der Fig. 1 abgebildete Vorrichtung nach dem Schließen der ersten Reifenaufnahmeeinheit in einer schematischen Schnittdarstellung; und
- Fig. 3: die in der Fig. 1 abgebildete Vorrichtung mit einer geöffneten zweiten Reifenaufnahmeeinheit in einer schematischen Schnittdarstellung.

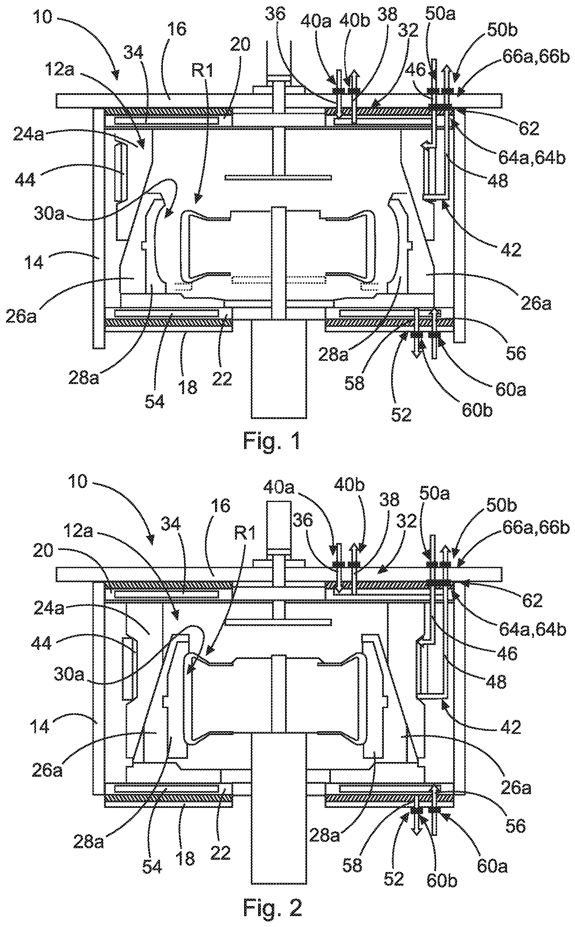

Die Fig. 1 zeigt eine Vorrichtung 10 zum Vulkanisieren eines Reifens. Die Vorrichtung 10 kann auch als Heizpresse oder Reifenvulkanisiermaschine bezeichnet werden. Die Vorrichtung 10 kann zum Vulkanisieren von Reifen unterschiedlicher Form und/oder Größe mit unterschiedlichen Reifenaufnahmeeinheiten 12a, 12b ausgestattet werden, wobei die Reifenaufnahmeeinheiten 12a, 12b auch als Container bezeichnet werden können.

Die Vorrichtung 10 weist einen um die Reifenaufnahmeeinheit 12a umlaufenden Isolationskörper 14 auf, welcher aus einem hitzebeständigen Isolationsmaterial ausgebildet ist. Der Isolationskörper 14 weist eine zylindrische Grundform auf und ist dazu eingerichtet, den Wärmeaustausch zwischen der Reifenaufnahmeeinheit 12a und der Umgebung der Vorrichtung 10 zu verringern. Der Isolationskörper 14 weist keine Ausnehmungen oder Öffnungen auf und ist ausklinkungsfrei ausgebildet, sodass ein etwaiger Fluid- und/oder Wärmeaustausch über Ausnehmungen, Öffnungen oder Ausklinkungen vermieden wird.

Oberhalb der Reifenaufnahmeeinheit 12a befindet sich ein in vertikaler Richtung verfahrbarer Druckkörper 16, welcher als Druckplatte ausgebildet ist. Unterhalb der Reifenaufnahmeeinheit 12a befindet sich ein feststehender Druckkörper 18, welcher ebenfalls als Druckplatte ausgebildet ist.

Die Vorrichtung 10 weist ferner einen oberen flachen Heizkörper 20, einen unteren flachen Heizkörper 22 und einen ringförmigen Heizkörper 24a auf. Der ringförmige Heizkörper 24a ist Bestandteil der Reifenaufnahmeeinheit 12a. Der obere flache Heizkörper 20a ist unterhalb des in vertikaler Richtung verfahrbaren Druckkörpers 16 angeordnet. Der untere flache Heizkörper 22 ist oberhalb des feststehenden Druckkörpers 18 angeordnet. Der ringförmige Heizkörper 24a ist ein abschnittsweise konischer Schließring, welcher dazu eingerichtet ist, bei einer Vertikalbewegung des Druckkörpers 16 ebenfalls in vertikaler Richtung bewegt zu werden. Über die Vertikalbewegung des konischen Heizkörpers 24a werden Formträgerteile 26a der Reifenaufnahmeeinheit 12a horizontal verfahren. Die Formträgerteile 26a weisen einen Gegenkonus zu dem Konus des als Schließring ausgebildeten ringförmigen Heizkörpers 24a auf. An den Formträgerteilen 26a sind Formsegmente 28a fixiert, welche eine Vulkanisierform 30a bilden. Zur Vulkanisierform 30a gehören ferner eine obere und eine untere Seitenschale sowie ein oberer und unterer Wulstring, welche aus Darstellungsgründen nicht abgebildet sind. Die Vulkanisierform 30a stellt einen Ausform- und Vulkanisierraum für die Aufnahme eines zu vulkanisierenden Reifenrohlings R1 bereit. Die Formsegmente 28a der Vulkanisierform 30a werden zum Schließen der Vulkanisierform 30a über den in vertikaler Richtung verfahrbaren Druckkörper 16, den ringförmigen Heizkörper 24a und die Formträgerteile 26a in horizontaler Richtung an den sich in dem Vulkanisierraum befindenden Reifenrohling R1 herangefahren. Das Vulkanisieren des Reifenrohlings R1 erfolgt dann bei geschlossener Vulkanisierform 30a.

Zum Erwärmen der Heizkörper 20, 22, 24a sind Fluidpfade 32, 42, 52 vorgesehen. Über die Fluidpfade 32, 42, 52 kann ein Temperiermedium, beispielsweise heißer Dampf, in die Heizkörper 20, 22, 24a eingeleitet werden.

Der Fluidpfad 32 erstreckt sich durch den oberen flachen Heizkörper 20 und umfasst eine Medienzuführleitung 36, eine Fluidkammer 34 und eine Medienabführleitung 38. Über die Medienzuführleitung 36 kann heißer Dampf in die Fluidkammer 34 innerhalb des oberen flachen Heizkörpers 20 eingeleitet werden. Über die Medienabführleitung 38 kann Kondensat aus der Fluidkammer 34 in dem oberen flachen Heizkörper 20 ausgeleitet werden. Die Medienzuführleitung 36 und die Medienabführleitung 38 des Fluidpfads 32 erstrecken sich durch den in vertikaler Richtung verfahrbaren Druckkörper 16 und sind mit Medienanschlüssen 40a, 40b verbunden, wobei die Medienanschlüsse 40a, 40b auf der der Reifenaufnahmeeinheit 12a abgewandten Seite des in vertikaler Richtung verfahrbaren Druckkörpers 16 angeordnet sind.

Der Fluidpfad 42 erstreckt sich durch den ringförmigen Heizkörper 24a der Reifenaufnahmeeinheit 12a und umfasst eine Medienzuführleitung 46, eine Fluidkammer 44 und eine Medienabführleitung 48. Die Fluidkammer 44 ist innerhalb des ringförmigen Heizkörpers 24a angeordnet. Über die Medienzuführleitung 46 kann heißer Dampf in die Fluidkammer 44 eingeleitet werden, wobei das sich in der Fluidkammer 44 bildende Kondensat über die Medienabführleitung 48 aus der Fluidkammer 44 abgeführt werden kann. Die Medienzuführleitung 46 und die Medienabführleitung 48 des sich durch den ringförmigen Heizkörper 24 erstreckenden Fluidpfads verlaufen durch den oberen flachen Heizkörper 20 und durch den in vertikaler Richtung verfahrbaren Druckkörper 16. Der sich durch den ringförmigen Heizkörper 24a der Reifenaufnahmeeinheit 12a erstreckende Fluidpfad 42 ist mit Medienanschlüssen 50a, 50b verbunden, wobei die Medienanschlüsse 50a, 50b auf der der Reifenaufnahmeeinheit 12a abgewandten Seite des in vertikaler Richtung verfahrbaren Druckkörpers 16 angeordnet sind.

Der Fluidpfad 52 erstreckt sich durch den unteren flachen Heizkörper 22 und umfasst eine Medienzuführleitung 56, eine Fluidkammer 54 und eine Medienabführleitung 58. Über die Medienzuführleitung 56 kann heißer Dampf in die Fluidkammer 54 innerhalb des unteren flachen Heizkörpers 22 eingeleitet werden. Über die Medienabführleitung 58 kann Kondensat aus der Fluidkammer 54 in dem unteren flachen Heizkörper 20 ausgeleitet werden. Die Medienzuführleitung 56 und die Medienabführleitung 58 des Fluidpfads 52 erstrecken sich durch den feststehenden Druckkörper 18 und sind mit Medienanschlüssen 60a, 60b verbunden, wobei die Medienanschlüsse 60a, 60b auf der der Reifenaufnahmeeinheit 12a abgewandten Seite des feststehenden Druckkörpers 18 angeordnet sind.

Der sich durch den ringförmigen Heizkörper 24a der Reifenaufnahmeeinheit 12a erstreckende Fluidpfad 42 ist mit Koppelanschlüssen 64a, 64b der Reifenaufnahmeeinheit 12a in einer Anschlusszone 62 des in vertikaler Richtung verfahrbaren Druckkörpers 16 mit Koppelanschlüssen 66a, 66b des in vertikaler Richtung verfahrbaren Druckkörpers 16 verbunden. Die Anschlusszone 62 ist als Universalschnittstelle zum Anschließen von Koppelanschlüssen 64a, 64b unterschiedlicher Reifenaufnahmeeinheiten 12a, 12b ausgebildet.

Die Fig. 2 zeigt eine Vorrichtung 10 mit geschlossener Reifenaufnahmeeinheit 12a. Die Formsegmente 28a der Vulkanisierform 30a wurden also durch eine Vertikalbewegung des Druckkörpers 16 horizontal an den sich in dem Vulkanisierraum befindenden Reifenrohling R1 herangefahren. In dem dargestellten Zustand erfolgt dann die Vulkanisierung des Reifenrohlings R1.

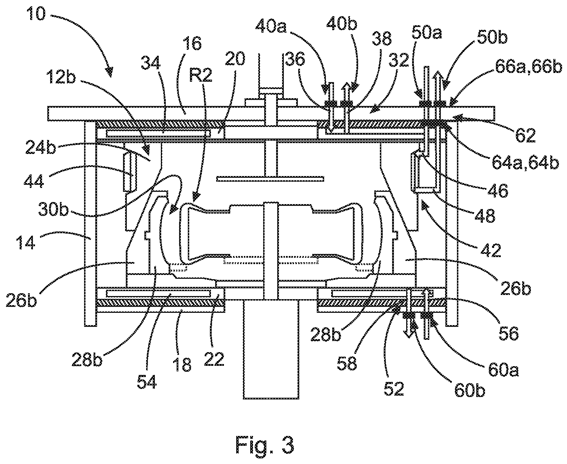

Die Fig. 3 zeigt, dass die Vorrichtung 10 mit einer alternativen Reifenaufnahmeeinheit 12b ausgestattet werden kann. Hierzu ist die Reifenaufnahmeeinheit 12a aus der Vorrichtung 10 auszubauen, damit die Reifenaufnahmeeinheit 12b in die Vorrichtung 10 eingebaut werden kann. Mit der Reifenaufnahmeeinheit 12b können Reifen mit einer anderen Form und/oder Größe vulkanisiert werden. Hierzu weist die Reifenaufnahmeeinheit 12b eine Vulkanisierform 30b auf, wobei die Vulkanisierform 30b einen Ausform- und Vulkanisierraum für die Aufnahme eines zu vulkanisierenden Reifenrohlings R2 bereitstellt. Durch den ringförmigen Heizkörper 24b der Reifenaufnahmeeinheit 12b erstreckt sich ebenfalls ein Fluidpfad 42 für ein Temperiermedium, wobei der sich durch den ringförmigen Heizkörper 24b erstreckende Fluidpfad 42 außerhalb des ringförmigen Heizkörpers 24b mit Koppelanschlüssen 64a, 64b der Reifenaufnahmeeinheit 12b verbunden ist. Die Koppelanschlüsse 64a, 64b der Reifenaufnahmeeinheit 12b sind in der Anschlusszone 62 des in vertikaler Richtung verfahrbaren Druckkörpers 16 mit den Koppelanschlüssen 66a, 66b des in vertikaler Richtung verfahrbaren Druckkörpers 16 verbunden.

Trotz der Tatsache, dass der ringförmige Heizkörper 24b, die Formträgerteile 26b und die Formsegmente 28b der Reifenaufnahmeeinheit 12b sich hinsichtlich ihrer Geometrie von den entsprechenden Teilen der Reifenaufnahmeeinheit 12a unterscheiden, können die Reifenaufnahmeeinheiten 12a, 12b in der gleichen Vorrichtung 10 verwendet werden. Die als Universalschnittstelle zum Anschließen von Koppelanschlüssen 64a, 64b unterschiedlicher Reifenaufnahmeeinheiten 12a, 12b ausgebildete Anschlusszone 62 ermöglicht ein schnelles und aufwandsarmes Wechseln der Reifenaufnahmeeinheiten 12a, 12b zum Vulkanisieren von Reifen unterschiedlicher Form und/oder Größe.

### Bezugszeichenliste

- 10: Vorrichtung
- 12a, 12b: Reifenaufnahmeeinheiten
- 14: Isolationskörper
- 16: Druckkörper
- 18: Druckkörper
- 20: oberer Heizkörper
- 22: unterer Heizkörper
- 24a, 24b: ringförmige Heizkörper
- 26a, 26b: Formträgerteile
- 28a, 28b: Formsegmente
- 30a, 30b: Vulkanisierformen
- 32: Fluidpfad
- 34: Fluidkammer
- 36: Medienzuführleitung
- 38: Medienabführleitung
- 40a, 40b: Medienanschlüsse
- 42: Fluidpfad
- 44: Fluidkammer
- 46: Medienzuführleitung
- 48: Medienabführleitung
- 50a, 50b: Medienanschlüsse
- 52: Fluidpfad
- 54: Fluidkammer
- 56: Medienzuführleitung
- 58: Medienabführleitung
- 60a, 60b: Medienanschlüsse
- 62: Anschlusszone
- 64a, 64b: Koppelanschlüsse
- 66a, 66b: Koppelanschlüsse
- R1, R2: Reifenrohlinge

## Patentansprüche

1. Vorrichtung (10) zum Vulkanisieren eines Reifens, mit
- einer Reifenaufnahmeeinheit (12a), welche eine Vulkanisierform (30a) aufweist, wobei die Vulkanisierform (30a) einen Ausform- und Vulkanisierraum für die Aufnahme eines zu vulkanisierenden Reifenrohlings (R1) bereitstellt, wobei sich ein Fluidpfad (42) für ein Temperiermedium durch einen ringförmigen Heizkörper (24a) der Reifenaufnahmeeinheit (12a) erstreckt,
- einem um die Reifenaufnahmeeinheit (12a) umlaufenden Isolationskörper (14), welcher dazu eingerichtet ist, einen Wärmeaustausch zwischen der Reifenaufnahmeeinheit (12a) und der Umgebung der Vorrichtung (10) zu verringern; und
- zumindest einem in vertikaler Richtung verfahrbaren Druckkörper (16), welcher auf einer Stirnseite der Reifenaufnahmeeinheit (12a) angeordnet ist, wobei mittels einer Vertikalbewegung des Druckkörpers (16) ein horizontales Heranfahren von Formsegmenten (28a) der Vulkanisierform (30a) an einen sich in dem Vulkanisierraum befindenden Reifenrohling (R1) veranlassbar ist;
wobei der sich durch den ringförmigen Heizkörper (24a) der Reifenaufnahmeeinheit (12a) erstreckende Fluidpfad (42) außerhalb des ringförmigen Heizkörpers (24a) durch den in vertikaler Richtung verfahrbaren Druckkörper (16) verläuft,
**dadurch gekennzeichnet,**
**dass** der sich durch den ringförmigen Heizkörper (24a) der Reifenaufnahmeeinheit (12a) erstreckende Fluidpfad (42) mit einem Koppelanschluss oder mehreren Koppelanschlüssen (64a, 64b) der Reifenaufnahmeeinheit (12a) verbunden ist, wobei der eine Koppelanschluss oder die mehreren Koppelanschlüsse (64a, 64b) der Reifenaufnahmeeinheit (12a) in einer Anschlusszone (62) des in vertikaler Richtung verfahrbaren Druckkörpers (16),
insbesondere zerstörungsfrei lösbar, mit einem Koppelanschluss (66a, 66b) bzw. mehreren Koppelanschlüssen (66a, 66b) des in vertikaler Richtung verfahrbaren Druckkörpers (16) verbunden ist bzw. sind,
wobei die Anschlusszone (62) als Universalschnittstelle zum Anschließen von Koppelanschlüssen (64a, 64b) unterschiedlicher Reifenaufnahmeeinheiten (12a, 12b) ausgebildet ist.

2. Vorrichtung (10) nach Anspruch 1,
**dadurch gekennzeichnet, dass** der umlaufende Isolationskörper (14) ausklinkungsfrei ausgebildet ist.

3. Vorrichtung (10) nach Anspruch 1 oder 2,
**dadurch gekennzeichnet, dass** der sich durch den ringförmigen Heizkörper (24a) der Reifenaufnahmeeinheit (12a) erstreckende Fluidpfad (42) mit einem Mediumanschluss (50a, 50b) oder mehreren Medienanschlüssen (50a, 50b) verbunden ist, wobei der eine Mediumanschluss (50a, 50b) oder die mehreren Medienanschlüsse (50a, 50b) auf der der Reifenaufnahmeeinheit (12a) abgewandten Seite des in vertikaler Richtung verfahrbaren Druckkörpers (16) angeordnet ist bzw. sind.

4. Vorrichtung (10) nach einem der vorstehenden Ansprüche, **gekennzeichnet durch** einen oberen flachen Heizkörper (20), welcher oberhalb des Ausform- und Vulkanisierraums der Reifenaufnahmeeinheit (12a) angeordnet ist, und **durch** welchen sich ein Fluidpfad (32) für ein Temperiermedium erstreckt, wobei der sich **durch** den oberen flachen Heizkörper (20) erstreckende Fluidpfad (32) außerhalb des oberen flachen Heizkörpers (20) durch den in vertikaler Richtung verfahrbaren Druckkörper (16) verläuft.

5. Vorrichtung (10) nach Anspruch 4,
**dadurch gekennzeichnet, dass** der sich durch den ringförmigen Heizkörper (24a) der Reifenaufnahmeeinheit (12a) erstreckende Fluidpfad (42) außerhalb des ringförmigen Heizkörpers (24a) durch den oberen flachen Heizkörper (20) verläuft.

6. Vorrichtung (10) nach einem der vorstehenden Ansprüche, **gekennzeichnet durch** einen unteren flachen Heizkörper (22), welcher unterhalb des Ausform- und Vulkanisierraums der Reifenaufnahmeeinheit (12a) angeordnet ist und **durch** welchen sich ein Fluidpfad (52) für ein Temperiermedium erstreckt, wobei der sich durch den unteren flachen Heizkörper (22) erstreckende Fluidpfad (52) außerhalb des unteren flachen Heizkörpers (22) **durch** einen festsehenden Druckkörper (18) unterhalb der Reifenaufnahmeeinheit (12a) verläuft.

7. Vorrichtung (10) nach einem der vorstehenden Ansprüche, **dadurch gekennzeichnet, dass** der ringförmige Heizkörper (24a) als ein abschnittsweise konischer Schließring ausgebildet ist, welcher dazu eingerichtet ist, über eine Vertikalbewegung ein oder mehrere die Vulkanisierform (30a) tragende Formträgerteile (26a) horizontal zu verfahren.

8. System zum Vulkanisieren von Reifen unterschiedlicher Form und/oder Größe, **gekennzeichnet durch**
- eine Vorrichtung (10) nach einem der Ansprüch 1 bis 7
- eine alternative Reifenaufnahmeeinheit (12b), welche eine Vulkanisierform (30b) aufweist, wobei die Vulkanisierform (30b) einen Ausform- und Vulkanisierraum für die Aufnahme eines zu vulkanisierenden Reifenrohlings (R2) bereitstellt, wobei sich **durch** einen ringförmigen Heizkörper (24b) der alternativen Reifenaufnahmeeinheit (12b) ein Fluidpfad (42) für ein Temperiermedium erstreckt und der sich **durch** den ringförmigen Heizkörper (24b) der alternativen Reifenaufnahmeeinheit (12b) erstreckende Fluidpfad (42) außerhalb des ringförmigen Heizkörpers (24b) mit einem oder mehreren Koppelanschlüssen (64a, 64b) der alternativen Reifenaufnahmeeinheit (12b) verbunden ist,
wobei die Reifenaufnahmeeinheit (12a) der Vorrichtung (10) **durch** die alternative Reifenaufnahmeeinheit (12b) zum Betreiben der Vorrichtung (10) mit der alternativen Reifenaufnahmeeinheit (12b) ersetzbar ist, und der eine oder die mehreren Koppelanschlüsse (64a, 64b) der alternativen Reifenaufnahmeeinheit (12b) nach einem Ausbau der Reifenaufnahmeeinheit (12a) in der Anschlusszone (62) des in vertikaler Richtung verfahrbaren Druckkörpers (16), insbesondere zerstörungsfrei lösbar, mit Koppelanschlüssen (66a, 66b) des in vertikaler Richtung verfahrbaren Druckkörpers (16) verbindbar sind.

9. Verfahren zum Betreiben einer Vorrichtung (10) zum Vulkanisieren von Reifen, insbesondere einer Vorrichtung (10) nach einem der Ansprüche 1 bis 9, mit den Schritten:
- Vulkanisieren eines ersten Reifens unter Verwendung einer ersten Reifenaufnahmeeinheit (12a) der Vorrichtung (10), wobei die erste Reifenaufnahmeeinheit (12a) eine erste Vulkanisierform (30a) aufweist und die erste Vulkanisierform (30a) einen Ausform- und Vulkanisierraum für die Aufnahme eines ersten zu vulkanisierenden Reifenrohlings (R1) bereitstellt, und
- Trennen von einem oder mehreren Koppelanschlüssen (64a, 64b) der ersten Reifenaufnahmeeinheit (12a), welche mit einem sich durch einen ringförmigen Heizkörper (24a) der ersten Reifenaufnahmeeinheit (12a) erstreckenden Fluidpfad (42) verbunden sind, von einem oder mehreren in einer Anschlusszone (62) eines in vertikaler Richtung verfahrbaren Druckkörpers (16) positionierten Koppelanschlüssen (66a, 66b) des in vertikaler Richtung verfahrbaren Druckkörpers (16);
**gekennzeichnet durch** die Schritte:
- Ersetzen der ersten Reifenaufnahmeeinheit (12a) **durch** eine zweite Reifenaufnahmeeinheit (12b), wobei die zweite Reifenaufnahmeeinheit (12b) eine zweite Vulkanisierform (30b) aufweist und die zweite Vulkanisierform (30b) einen Ausform- und Vulkanisierraum für die Aufnahme eines zweiten zu vulkanisierenden Reifenrohlings (R2) bereitstellt und wobei sich die zweite Reifenaufnahmeeinheit (12b) von der ersten Reifenaufnahmeeinheit (12a) hinsichtlich ihrer Form und/oder Größe unterscheidet,
- Verbinden von einem oder mehreren Koppelanschlüssen (64a, 64b) der zweiten Reifenaufnahmeeinheit (12b), welche mit einem sich **durch** einen ringförmigen Heizkörper (24b) der zweiten Reifenaufnahmeeinheit (12b) erstreckenden Fluidpfad (42) verbunden sind, mit dem einen oder den mehreren in der Anschlusszone (62) des in vertikaler Richtung verfahrbaren Druckkörpers (16) positionierten Koppelanschlüssen (66a, 66b) des in vertikaler Richtung verfahrbaren Druckkörpers (16); und
- Vulkanisieren eines zweiten Reifens unter Verwendung der zweiten Reifenaufnahmeeinheit (12b).

## Claims

1. Apparatus (10) for vulcanizing a tyre, with
- a tyre receiving unit (12a), which has a vulcanizing mould (30a), wherein the vulcanizing mould (30a) provides a shaping and vulcanizing space for receiving a green tyre (R1) to be vulcanized, with a fluid path (42) for a temperature control medium extending through an annular heating body (24a) of the tyre receiving unit (12a),
- an insulating body (14), running around the tyre receiving unit (12a), to reduce an exchange of heat between the tyre receiving unit (12a) and the surroundings of the apparatus (10); and
- at least one pressure body (16), which is movable in the vertical direction and is arranged on an end face of the tyre receiving unit (12a), a vertical movement of the pressure body (16) being able to initiate a horizontal movement of mould segments (28a) of the vulcanizing mould (30a) up to a green tyre (R1) located in the vulcanizing space;
wherein the fluid path (42) extending through the annular heating body (24a) of the tyre receiving unit (12a) runs outside the annular heating body (24a), through the vertically movable pressure body (16),
**characterized**
**in that** the fluid path (42) extending through the annular heating body (24a) of the tyre receiving unit (12a) is connected to one coupling connection or a plurality of coupling connections (64a, 64b) of the tyre receiving unit (12a), wherein the one coupling connection or the plurality of coupling connections (64a, 64b) of the tyre receiving unit (12a) is or are connected in a connection zone (62) of the vertically movable pressure body (16), in particular so as to be releasable without being destroyed, to one coupling connection (66a, 66b) or to a plurality of coupling connections (66a, 66b) of the vertically movable pressure body (16),
the connection zone (62) being in the form of a universal interface for connecting coupling connections (64a, 64b) of different tyre receiving units (12a, 12b).

2. Apparatus (10) according to Claim 1,
**characterized in that** the surrounding insulating body (14) is free from notches.

3. Apparatus (10) according to Claim 1 or 2,
**characterized in that** the fluid path (42) extending through the annular heating body (24a) of the tyre receiving unit (12a) is connected to one media connection (50a, 50b) or plurality of media connections (50a, 50b), wherein the one media connection (50a, 50b) or the plurality of media connections (50a, 50b) is or are arranged on that side of the vertically movable pressure body (16) which faces away from the tyre receiving unit (12a).

4. Apparatus (10) according to any one of the preceding claims,
**characterized by** an upper flat heating body (20), which is arranged above the shaping and vulcanizing space of the tyre receiving unit (12a), and through which a fluid path (32) for a temperature control medium extends, wherein the fluid path (32) extending through the upper flat heating body (20) runs outside the upper flat heating body (20) through the vertically movable pressure body (16).

5. Apparatus (10) according to Claim 4,
**characterized in that** the fluid path (42) extending through the annular heating body (24a) of the tyre receiving unit (12a) runs outside the annular heating body (24a) through the upper flat heating body (20).

6. Apparatus (10) according to any one of the preceding claims,
**characterized by** a lower flat heating body (22), which is arranged below the shaping and vulcanizing space of the tyre receiving unit (12a), and through which a fluid path (52) for a temperature control medium extends, wherein the fluid path (52) extending through the lower flat heating body (22) runs outside the lower flat heating body (22) through a fixed pressure body (18) below the tyre receiving unit (12a).

7. Apparatus (10) according to any one of the preceding claims,
**characterized in that** the annular heating body (24a) is in the form of a closing ring which is conical in some sections and which is designed, via a vertical movement, to horizontally move one or more mould support parts (26a) supporting the vulcanizing mould (30a).

8. System for vulcanizing tyres of different shape and/or size, **characterized by**
- an apparatus (10) according to any one of Claims 1 to 7;
- an alternative tyre receiving unit (12b), which has a vulcanizing mould (30b), wherein the vulcanizing mould (30b) provides a shaping and vulcanizing space for receiving a green tyre (R2) to be vulcanized, wherein a fluid path (42) for a temperature control medium extends through an annular heating body (24b) of the alternative tyre receiving unit (12b), and the fluid path (42) extending through the annular heating body (24b) of the alternative tyre receiving unit (12b) is connected outside the annular heating body (24b) to one or more coupling connections (64a, 64b) of the alternative tyre receiving unit (12b),
wherein the tyre receiving unit (12a) of the apparatus (10) is replaceable by the alternative tyre receiving unit (12b) for operating the apparatus (10) with the alternative tyre receiving unit (12b), and the one coupling connection or the plurality of coupling connections (64a, 64b) of the alternative tyre receiving unit (12b), after removal of the tyre receiving unit (12a), are connectable, in particular so as to be releasable without being destroyed, in the connection zone (62) of the vertically movable pressure body (16), to coupling connections (66a, 66b) of the vertically movable pressure body (16).

9. Method for operating an apparatus (10) for vulcanizing tyres, in particular an apparatus (10) according to any one of Claims 1 to 9, comprising the steps of:
- vulcanizing a first tyre using a first tyre receiving unit (12a) of the apparatus (10), wherein the first tyre receiving unit (12a) has a first vulcanizing mould (30a) and the first vulcanizing mould (30a) provides a shaping and vulcanizing space for receiving a first green tyre (R1) to be vulcanized, and
- separating one or more coupling connections (64a, 64b) of the first tyre receiving unit (12a), which are connected to a fluid path (42) extending through an annular heating body (24a) of the first tyre receiving unit (12a), from one or more coupling connections (66a, 66b), which are positioned in a connection zone (62) of a vertically movable pressure body (16), of the vertically movable pressure body (16);
**characterized by** the steps of:
- replacing the first tyre receiving unit (12a) with a second tyre receiving unit (12b), wherein the second tyre receiving unit (12b) has a second vulcanizing mould (30b), and the second vulcanizing mould (30b) provides a shaping and vulcanizing space for receiving a second green tyre (R2) to be vulcanized, and wherein the second tyre receiving unit (12b) differs in respect of its shape and/or size from the first tyre receiving unit (12a),
- connecting one or more coupling connections (64a, 64b) of the second tyre receiving unit (12b), which are connected to a fluid path (42) extending through an annular heating body (24b) of the second tyre receiving unit (12b), to the one coupling connection or the plurality of coupling connections (66a, 66b), which are positioned in the connection zone (62) of the vertically movable pressure body (16), of the vertically movable pressure body (16); and
- vulcanizing a second tyre using the second tyre receiving unit (12b).

## Revendications

1. Dispositif (10) pour vulcaniser un pneu, avec
- une unité de réception de pneu (12a) qui présente un moule de vulcanisation (30a), le moule de vulcanisation (30a) fournissant un espace de moulage et de vulcanisation pour recevoir une ébauche de pneu (R1) à vulcaniser, un chemin de fluide (42) pour un milieu de régulation de température s'étendant à travers un corps chauffant annulaire (24a) de l'unité de réception de pneu (12a),
- un corps isolant (14) entourant l'unité de réception de pneu (12a), qui est adapté pour réduire un échange thermique entre l'unité de réception de pneu (12a) et l'environnement du dispositif (10) ; et
- au moins un corps de pression (16) déplaçable dans la direction verticale, qui est agencé sur un côté frontal de l'unité de réception de pneu (12a), un mouvement vertical du corps de pression (16) permettant d'approcher horizontalement des segments de moule (28a) du moule de vulcanisation (30a) vers une ébauche de pneu (R1) se trouvant dans l'espace de vulcanisation ;
le chemin de fluide (42) s'étendant à travers le corps chauffant annulaire (24a) de l'unité de réception de pneu (12a) passant à l'extérieur du corps chauffant annulaire (24a) à travers le corps de pression (16) déplaçable dans la direction verticale,
**caractérisé**
**en ce que** le chemin de fluide (42) s'étendant à travers le corps chauffant annulaire (24a) de l'unité de réception de pneu (12a) est relié à un raccord de couplage ou plusieurs raccords de couplage (64a, 64b) de l'unité de réception de pneu (12a), le raccord de couplage ou les plusieurs raccords de couplage (64a, 64b) de l'unité de réception de pneu (12a) étant relié, notamment de manière amovible sans destruction, dans une zone de raccordement (62) du corps de pression (16) déplaçable dans la direction verticale, à un raccord de couplage (66a, 66b) ou plusieurs raccords de couplage (66a, 66b) du corps de pression (16) déplaçable dans la direction verticale,
la zone de raccordement (62) étant réalisée sous forme d'interface universelle pour raccorder des raccords de couplage (64a, 64b) de différentes unités de réception de pneus (12a, 12b).

2. Dispositif (10) selon la revendication 1,
**caractérisé en ce que** le corps isolant périphérique (14) est réalisé sans encoche.

3. Dispositif (10) selon la revendication 1 ou 2,
**caractérisé en ce que** le chemin de fluide (42) s'étendant à travers le corps chauffant annulaire (24a) de l'unité de réception de pneu (12a) est relié à un raccord de fluide (50a, 50b) ou à plusieurs raccords de fluide (50a, 50b), le raccord de fluide (50a, 50b) ou les plusieurs raccords de fluide (50a, 50b) étant agencé(s) sur le côté du corps de pression (16) déplaçable dans la direction verticale qui est détourné de l'unité de réception de pneu (12a).

4. Dispositif (10) selon l'une quelconque des revendications précédentes, **caractérisé par** un corps chauffant plat supérieur (20) qui est agencé au-dessus de l'espace de moulage et de vulcanisation de l'unité de réception de pneu (12a) et à travers lequel s'étend un chemin de fluide (32) pour un milieu de régulation de température, le chemin de fluide (32) s'étendant à travers le corps chauffant plat supérieur (20) passant à l'extérieur du corps chauffant plat supérieur (20) à travers le corps de pression (16) déplaçable dans la direction verticale.

5. Dispositif (10) selon la revendication 4,
**caractérisé en ce que** le chemin de fluide (42) s'étendant à travers le corps chauffant annulaire (24a) de l'unité de réception de pneu (12a) passe à l'extérieur du corps chauffant annulaire (24a) à travers le corps chauffant plat supérieur (20).

6. Dispositif (10) selon l'une quelconque des revendications précédentes, **caractérisé par** un corps chauffant plat inférieur (22) qui est agencé en dessous de l'espace de moulage et de vulcanisation de l'unité de réception de pneus (12a) et à travers lequel s'étend un chemin de fluide (52) pour un agent de régulation de température, le chemin de fluide (52) s'étendant à travers le corps chauffant plat inférieur (22) s'étendant à l'extérieur du corps chauffant plat inférieur (22) à travers un corps de pression fixe (18) en dessous de l'unité de réception de pneu (12a).

7. Dispositif (10) selon l'une quelconque des revendications précédentes, **caractérisé en ce que** le corps chauffant annulaire (24a) est réalisé sous la forme d'une bague de fermeture conique par sections, qui est adaptée pour déplacer horizontalement, par un mouvement vertical, une ou plusieurs pièces porte-moule (26a) supportant le moule de vulcanisation (30a).

8. Système pour vulcaniser des pneus de formes et/ou de tailles différentes, **caractérisé par**
- un dispositif (10) selon l'une quelconque des revendications 1 à 7
- une unité de réception de pneu alternative (12b) qui présente un moule de vulcanisation (30b), le moule de vulcanisation (30b) fournissant un espace de moulage et de vulcanisation pour recevoir une ébauche de pneu (R2) à vulcaniser, un chemin de fluide (42) pour un milieu de régulation de température s'étendant à travers un corps chauffant annulaire (24b) de l'unité de réception de pneu alternative (12b) et le chemin de fluide (42) s'étendant à travers le corps chauffant annulaire (24b) de l'unité de réception de pneu alternative (12b) étant relié, à l'extérieur du corps chauffant annulaire (24b), à un ou plusieurs raccords de couplage (64a, 64b) de l'unité de réception de pneu alternative (12b),
l'unité de réception de pneu (12a) du dispositif (10) pouvant être remplacée par l'unité de réception de pneu alternative (12b) afin de faire fonctionner le dispositif (10) avec l'unité de réception de pneu alternative (12b), et le ou les plusieurs raccords de couplage (64a, 64b) de l'unité de réception de pneu alternative (12b) pouvant être reliés, après un démontage de l'unité de réception de pneu (12a), dans la zone de raccordement (62) du corps de pression (16) déplaçable dans la direction verticale, notamment de manière amovible sans destruction, à des raccords de couplage (66a, 66b) du corps de pression (16) déplaçable dans la direction verticale.

9. Procédé pour faire fonctionner un dispositif (10) pour vulcaniser des pneus, notamment un dispositif (10) selon l'une quelconque des revendications 1 à 9, avec les étapes suivantes :
- la vulcanisation d'un premier pneu en utilisant une première unité de réception de pneu (12a) du dispositif (10), la première unité de réception de pneu (12a) présentant un premier moule de vulcanisation (30a) et le premier moule de vulcanisation (30a) fournissant un espace de moulage et de vulcanisation pour recevoir une première ébauche de pneu (R1) à vulcaniser, et
- la séparation d'un ou plusieurs raccords de couplage (64a, 64b) de la première unité de réception de pneu (12a), qui sont reliés à un chemin de fluide (42) s'étendant à travers un corps chauffant annulaire (24a) de la première unité de réception de pneu (12a), d'un ou plusieurs raccords de couplage (66a, 66b) du corps de pression (16) déplaçable dans la direction verticale, positionnés dans une zone de raccordement (62) du corps de pression (16) déplaçable dans la direction verticale ;
**caractérisé par** les étapes suivantes :
- le remplacement de la première unité de réception de pneu (12a) par une deuxième unité de réception de pneu (12b), la deuxième unité de réception de pneu (12b) présentant un deuxième moule de vulcanisation (30b) et le deuxième moule de vulcanisation (30b) fournissant un espace de moulage et de vulcanisation pour recevoir une deuxième ébauche de pneu à vulcaniser (R2), et la deuxième unité de réception de pneu (12b) différant de la première unité de réception de pneu (12a) en termes de sa forme et/ou de sa taille,
- la liaison d'un ou plusieurs raccords de couplage (64a, 64b) de la deuxième unité de réception de pneu (12b), qui sont reliés à un chemin de fluide (42) s'étendant à travers un corps chauffant annulaire (24b) de la deuxième unité de réception de pneu (12b), aux un ou plusieurs raccords de couplage (66a, 66b) du corps de pression (16) déplaçable dans la direction verticale, positionnés dans la zone de raccordement (62) du corps de pression (16) déplaçable dans la direction verticale ; et
- la vulcanisation d'un deuxième pneu en utilisant la deuxième unité de réception de pneu (12b).
